# EUROPÄISCHE PATENTSCHRIFT

(11) **EP 3 473 566 B1**
(45) Veröffentlichungstag und Bekanntmachung des Hinweises auf die Patenterteilung: **28.12.2022**
(21) Anmeldenummer: 18201549.5
(22) Anmeldetag: 19.10.2018
(51) Int. Cl.: B65G 49/04, B05B 13/04, B62D 65/18

(54) **FÖRDERSYSTEM ZUM TRANSPORT VON GEGENSTÄNDEN IN EINER TAUCHBEHANDLUNGSANLAGE**
CONVEYOR SYSTEM FOR TRANSPORTING OBJECTS IN A DIP COATING SYSTEM
SYSTÈME DE TRANSPORT DESTINÉ AU TRANSPORT DES OBJETS DANS UNE INSTALLATION DE TRAITEMENT PAR IMMERSION

(30) Priorität: 20.10.2017 DE 102017124609
(43) Veröffentlichungstag der Anmeldung: 24.04.2019
(73) Patentinhaber: Eisenmann GmbH, 71032 Böblingen (DE)
(72) Erfinder: Riegraf, Martin, 72766 Reutlingen (DE)
(74) Vertreter: Ostertag & Partner Patentanwälte mbB

(56) Entgegenhaltungen:
- DE-A1-102006 026 089
- DE-B- 1 257 674
- US-A1- 2011 176 894
- US-A1- 2013 026 006

## Beschreibung

### HINTERGRUND DER ERFINDUNG

### 1. Gebiet der Erfindung

Die Erfindung betrifft ein Fördersystem zum Transport von Fahrzeugkarosserien und anderen Gegenständen in einer Tauchbehandlungsanlage, in der die Gegenstände zeitweise durch ein mit einer Flüssigkeit gefülltes Tauchbecken gefördert werden.

### 2. Beschreibung des Standes der Technik

Aus der DE 10 2010 004 974 A1 (entspricht US 2013/0026006 A1) ist ein Fördersystem zum Transport von Gegenständen in einer Tauchbehandlungsanlage bekannt, bei dem mindestens ein Transportwagen sich in einer Förderrichtung auf Fahrschienen bewegt. Ein Fahrgestell des Transportwagens trägt eine Drehwelle mit zwei daran befestigten Schwenkarmen, wobei die durch die Drehwelle festgelegte Schwenkachse quer zur Förderrichtung verläuft. Am Ende der Schwenkarme ist eine Befestigungseinrichtung angeordnet, mit der sich der zu fördernde Gegenstand an dem Transportwagen befestigen lässt. Die Drehwelle mit den daran befestigen Schwenkarmen ist mit einem Koppelhebel verbunden, der sich in radialer Richtung von der Drehwelle weg erstreckt. Das von der Drehwelle abliegende Ende des Koppelhebels ist dabei an die Spindel eines Spindelantriebs angelenkt. Durch Ein- oder Ausfahren der Spindel aus einem Spindelgehäuse können die Schwenkarme um die Schwenkachse verschwenkt werden.

Derartige Spindelantriebe enthalten in der Regel teure Kugelgewindetriebe. Neben Spindelantrieben werden als Antriebe für die Schwenkarme auch Hydraulikzylinder verwendet, die allerdings wegen der Gefahr von Verunreinigungen durch die Hydraulikflüssigkeit in Tauchbehandlungsanlagen nicht unproblematisch sind.

Ein Fördersystem mit allen Merkmalen des Oberbegriffs des Anspruchs 1 ist außerdem aus der US 2011/0176894 A1 bekannt.

Aus der DE 102 67 108 A1 ist ein Fördersystem zum Transport von Gegenständen in einer Tauchbehandlungsanlage bekannt, das mindestens eine außerhalb des Tauchbeckens angeordnete Fahrschiene aufweist. Jeder der Transportwagen umfasst dabei ein Fahrwerk, welches von der mindestens einen Fahrschiene getragen wird. Mittels eines um eine Schwenkachse auslenkbaren Schwenkarmes ist eine Hubplattform absenkbar. An einer der Schwenkachse gegenüberliegenden Seite der Hubplattform sind Seile befestigt. Durch Betätigen von an dem Transportwagen befestigten Seilwinden kann die Hubplattform abgesenkt werden.

Aus der US 2011/0176894 A1 ist ferner ein Fördersystem zum Transport von Gegenständen in einer Tauchbehandlungsanlage bekannt, bei dem ein Transportwagen mit einem Fahrgestell und einem daran befestigtes Fahrwerk einen Schwenkarm aufweist, der durch Drehung einer Schwenkwelle um eine quer zur Fahrtrichtung angeordnete Schwenkachse schwenkbar ist. An einem von der Schwenkachse weg weisenden Ende trägt der Schwenkarm eine Befestigungseinrichtung zum Befestigen einer in ein Tauchbecken einzutauchenden Fahrzeugkarosserie. Mit Hilfe eines Gurtantriebs ist der Schwenkarm absenkbar. Der Gurt greift hierzu an einem Ende des Schwenkarms an und wird über eine Umlenkrolle zu einem auf der Höhe des Fahrgestells befestigte Winde geführt. Der Gurt taucht dadurch ebenfalls teilweise in das Tauchbecken ein.

### ZUSAMMENFASSUNG DER ERFINDUNG

Aufgabe der Erfindung ist es daher, ein Fördersystem der bekannten Art anzugeben, dessen Transportwagen zum Verschwenken eines Schwenkarms einen Antrieb hat, der kostengünstig ist und keine Verunreinigungen erzeugt.

Erfindungsgemäß wird diese Aufgabe durch ein Fördersystem gemäß Anspruch 1 zum Transport von Gegenständen in einer Tauchbehandlungsanlage gelöst, in der die Gegenstände durch ein mit einer Flüssigkeit gefülltes Tauchbecken gefördert werden. Das Fördersystem weist mindestens eine außerhalb des Tauchbeckens angeordnete Fahrschiene und einen Transportwagen auf. Der Transportwagen umfasst ein Fahrgestell, ein an dem Fahrgestell befestigtes Fahrwerk, das von der mindestens einen Fahrschiene getragen wird, eine Schwenkwelle und einen Schwenkarm. Der Schwenkarm ist, durch Drehung der Schwenkwelle, um eine quer zu der mindestens einen Fahrschiene angeordnete Schwenkachse schwenkbar und trägt an einem von der Schwenkachse weg weisenden Ende eine Befestigungseinrichtung zum Befestigen eines in das Tauchbecken einzutauchenden Gegenstandes an dem Transportwagen. Ferner weist der Transportwagen einen Antrieb mit einem Motor zum Schwenken des Schwenkarms um die Schwenkachse auf. Erfindungsgemäß umfasst der Antrieb ein langgestrecktes biegeschlaffes Zugelement und einen mit der Schwenkwelle starr verbundenen und radial nach außen ragenden Koppelhebel, mit welchem das Zugelement an einem Ende verbunden ist, wobei das Zugelement den Schwenkarm über den Koppelhebel mit dem Motor so verbindet, dass der Schwenkarm aufgrund der Schwerkraft und von dem Zugelement kontrolliert gehalten absenkbar und mit Hilfe des Motors und des Zugelements anhebbar ist.

Die Erfindung beruht auf der Erkenntnis, dass die auf den Schwenkarm und den gegebenenfalls davon gehaltenen Gegenstand einwirkende Schwerkraft ausreicht, um den Schwenkarm ohne zusätzliche Antriebsenergie abzusenken und einen von dem Schwenkarm gehaltenen Gegenstand in das Tauchbecken einzutauchen. Um den Schwenkarm wieder anzuheben, genügt ein Gurt, ein Seil oder ein anderes biegeschlaffes Zugelement, das an dem Schwenkarm unmittelbar oder über einen starr mit dem Schwenkarm verbundenen Koppelhebel befestigt ist. Durch Ziehen am Zugelement mit Hilfe des Motors wird der Schwenkarm angehoben und dabei ein am Schwenkarm befestigter Gegenstand aus dem Tauchbecken gezogen.

Beim Absenken des Schwenkarms aufgrund der Schwerkraft bleibt das Zugelement gestrafft und kann verhindern, dass der Schwenkarm unkontrolliert abgesenkt. Einer Druckbeanspruchung wird das Zugelement somit zu keinem Zeitpunkt ausgesetzt. Dadurch wird auch der Motor des Antriebs nur einseitig belastet.

Im Vergleich zu den bekannten Spindel- oder Hydraulikantrieben ist der erfindungsgemäße Antrieb wesentlich kostengünstiger und zudem schmiermittelfrei. Eine Spule, auf der das biegeschlaffe Zugelement aufgewickelt sein kann, lässt sich schmiermittelfrei oder jedenfalls mit einer sehr geringen Schmiermittelmenge lagern.

Im Vergleich zu umlaufenden (Zahn-)Riemen, die im Stand der Technik ebenfalls zur Ankopplung des Motors an den Schwenkarm verwendet werden, entfallen die Spannelemente für das Last- und Rücktrum.

Vorzugsweise weist das Fördersystem zwei Fahrschienen auf, auf denen sich der Transportwagen mit seinem Fahrwerk abstützt. Das Fahrwerk kann zu diesem Zweck zwei, drei oder auch vier Räder aufweisen. Ein solcher sich auf zwei Fahrschienen fortbewegender Transportwagen weist vorzugsweise nicht nur einen, sondern zwei parallel angeordnete Schwenkarme auf, die gemeinsam die Befestigungseinrichtung zum Befestigen des Gegenstandes an dem Transportwagen tragen und zwischen sich den Gegenstand aufnehmen. Die Erfindung ist jedoch auch bei Fördersystemen einsetzbar, die nur eine Fahrschiene haben, auf der zwei Räder hintereinander ablaufen. In der Regel wird der einzutauchende Gegenstand dann auch nur von einem einzigen Schwenkarm getragen.

Bei einem Ausführungsbeispiel ist das Zugelement Teil eines Flaschenzuges, der den Schwenkarm mit dem Motor verbindet. Auf diese Weise kann gegebenenfalls auf ein Untersetzungsgetriebe verzichtet werden, das den Motor mit dem Zugelement oder einer Spule verbindet, auf der das Zugelement aufgewickelt ist.

Im einfachsten Fall eines solchen Flaschenzuges ist das Zugelement an einem Ende auf eine von dem Motor angetriebenen Spule aufgewickelt, an dem anderen Ende an dem Fahrgestell befestigt und über eine an dem Schwenkarm befestigte Umlenkrolle geführt. Die zum Verschwenken benötigte Kraft wird auf diese Weise um den Faktor ½ verringert.

Wie oben bereits erwähnt, wird der Schwenkarm beim Absenken aufgrund der Schwerkraft von dem Zugelement kontrolliert gehalten. Die erforderlichen Haltekräfte können beispielsweise von einer Bremseinrichtung erzeugt werden, die an dem Zugelement angreift und die Bewegung des Zugelements und damit auch des Schwenkarms bremst. Die beim Absenken des Schwenkarms freiwerdende kinetische Energie wird auf diese Weise in Wärme umgewandelt.

Der Transportwagen kann einen Energiespeicher tragen, der beim Absenken des Schwenkarms aufladbar und dessen gespeicherte Energie beim Anheben des Schwenkarms nutzbar ist. Ein solcher Energiespeicher wird im einfachsten Fall durch eine Druckfeder gebildet, die beim Absenken des Schwenkarms komprimiert wird. Beim Anheben des Schwenkarms kann die in der Feder gespeicherte Energie genutzt und auf diese Weise der Motor des Antriebs entlastet werden. Eine solche Druckfeder kann selbstverständlich auch durch ähnlich wirkende Vorrichtungen ersetzt werden, z.B. durch einen in einem Zylinder geführten Kolben, der beim Absenken des Schwenkarms die in dem Zylinder enthaltene Luft komprimiert.

Bei dem für den Antrieb verwendeten Motor kann es sich um jede Maschine handeln, die mechanische Arbeit verrichtet, indem sie thermische, chemische oder elektrische Energie in Bewegungsenergie umwandelt. Wird als Motor ein Elektromotor verwendet, so kann der Energiespeicher ein Akkumulator sein, der dazu eingerichtet ist, beim Absenken des Schwenkarms von dem Elektromotor im Generatorbetrieb erzeugte elektrische Energie zwischenzuspeichern. Die zwischengespeicherte Energie kann später beim erneuten Anheben des Schwenkarms genutzt werden, wodurch sich der Gesamtenergieverbrauch des Antriebs verringern lässt.

Damit der einzutauchende Gegenstand während der Schwenkbewegung des Schwenkarms in die gewünschte Orientierung gebracht werden kann, kann die Befestigungseinrichtung relativ zu dem Schwenkarm um eine Drehachse motorisch verschwenkbar sein, die parallel zu der Schwenkachse des Schwenkarms angeordnet ist, wie dies an sich bereits im Stand der Technik bekannt ist. Durch das unabhängige Betätigen der Drehachse und der Schwenkachse lassen sich in weiten Grenzen beliebige Bewegungsabläufe beim Ein- und Austauchen der Gegenstände in das Tauchbecken realisieren.

Infolge der Verwendung eines biegeschlaffen Zugelements muss bei der Schwenkbewegung des Schwenkarms ein Überschreiten der Totpunkte vermieden werden. Ein solcher Totpunkt entsteht, wenn der Schwerpunkt des Schwenkarms und des gegebenenfalls davon getragenen Gegenstandes genau oberhalb oder unterhalb der Schwenkachse liegt. Der Schwenkwinkelbereich des Schwenkarms sollte deswegen so begrenzt sein, dass die beiden Totpunkte nicht erreicht werden, was zu einem Schwenkwinkelbereich von weniger als 180° führt. Bei Fördersystemen, bei denen das Gewicht und die Lage der vom Schwenkarm getragenen Gegenstände variieren kann, empfiehlt es sich, einen kleineren Schwenkwinkelbereich zu wählen, z.B. von maximal 170°.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine schematische Vorderansicht auf einen sich über ein Tauchbecken bewegenden Transportwagen eines erfindungsgemäßen Fördersystems gemäß einem ersten Ausführungsbeispiel;
- Figur 2: eine schematische Seitenansicht auf die in der Figur 1 gezeigte Anordnung, wobei sich eine von dem Transportwagen geförderter und von zwei Schwenkarmen gehaltene Fahrzeugkarosserie hoch über dem Tauchbecken befindet;
- Figur 3: eine der Figur 2 entsprechende Darstellung, jedoch bei teilweise abgesenkten Schwenkarmen während des Eintauchens der Fahrzeugkarosserie in das Tauch-becken;
- Figur 4: eine der Figur 2 entsprechende Darstellung, jedoch bei vollständig abgesenkten Schwenkarmen, so dass sich die Fahrzeugkarosserie an ihrem tiefsten Punkt im Tauchbecken befindet;
- Figur 5: eine schematische Seitenansicht wie in Figur 2 auf einen Transportwagen gemäß einem zweiten Ausführungsbeispiel, bei dem ein Motor über einen Flaschenzug die Schwenkarme antreibt;
- Figur 6: der in der Figur 5 gezeigte Transportwagen in einer der Figur 3 entsprechenden Stellung der Schwenkarme.

### BESCHREIBUNG BEVORZUGTER AUSFÜHRUNGSBEISPIELE

### 1. Erstes Ausführungsbeispiel

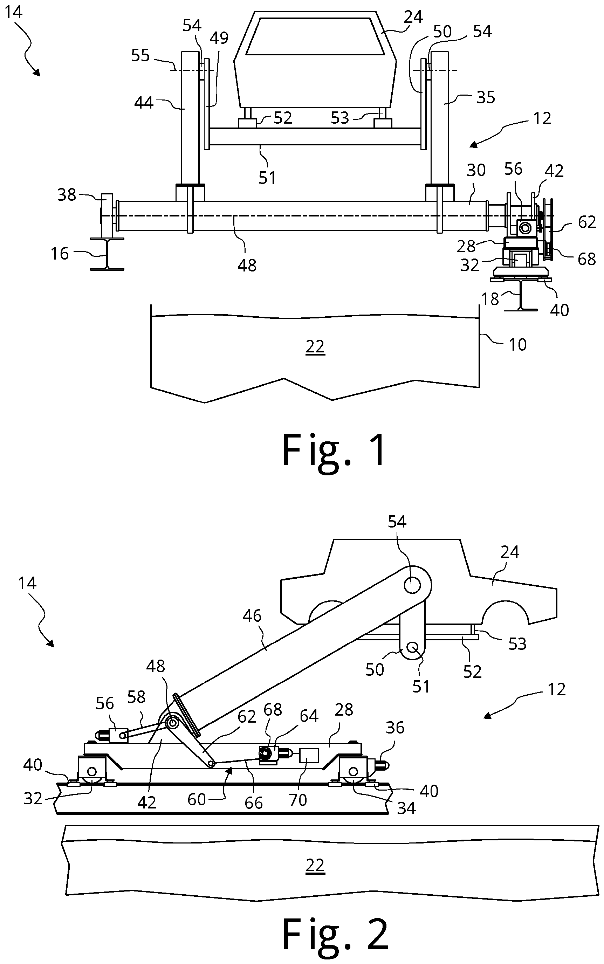

Die Figur 1 zeigt in einer schematischen Vorderansicht einen sich über ein Tauchbecken 10 einer Tauchbehandlungsanlage 11 bewegenden Transportwagen 12, der Teil eines erfindungsgemäßen und insgesamt mit 14 bezeichneten Fördersystems gemäß einem ersten Ausführungsbeispiel ist. Zum Fördersystem 14 gehören weitere gleichartig aufgebaute Transportwagen, die in den Figuren der Übersichtlichkeit halber nicht dargestellt sind.

Das Fördersystem 14 umfasst außerdem zwei zueinander parallele, jedoch auf unterschiedlichen Höhen verlaufende Fahrschienen 16, 18, diejeweils als I-Profil ausgebildet sind. Die Förderrichtung des Fördersystems 14, entlang der sich der Transportwagen 12 bewegt, verläuft senkrecht zur Längsrichtung der Fahrschienen 16, 18 und somit in der Darstellung der Figur 1 senkrecht zur Papierebene.

Die beiden Fahrschienen 16, 18 sind oberhalb des mit einer Flüssigkeit 22 gefüllten Tauchbeckens 10 angeordnet und stützen sich auf einer nicht dargestellten Tragstruktur der Tauchbehandlungsanlage ab. Bei der Flüssigkeit 22 kann es sich beispielsweise um einen Lack handeln, dessen Partikel kataphoretisch an der Oberfläche einer Fahrzeugkarosserie 24 abgeschieden werden, nachdem diese von dem Transportwagen 12 in die Flüssigkeit 22 eingetaucht wurde.

Der Transportwagen 12 weist ein Fahrgestell auf, das eine Längstraverse 28, die am besten in der Seitenansicht in der Figur 2 erkennbar ist, und eine senkrecht dazu verlaufende und an der Längstraverse 28 gelagerte Schwenkwelle 30 umfasst. An dem Fahrgestell ist ein Fahrwerk befestigt, das im dargestellten Ausführungsbeispiel insgesamt drei Räder mit entsprechenden Radaufhängungen umfasst. Wie in der Seitenansicht der Figur 2 erkennbar ist, befinden sich unterhalb der Längstraverse 28 ein erstes Laufrad 32 und ein zweites Laufrad 34, wobei nur das zweite Laufrad 34 von einem elektrischen Fahrmotor 36 angetrieben wird. Auf der anderen Fahrschiene 16 läuft ein drittes Laufrad 38 ab, das ebenfalls nicht angetrieben ist. Um den Transportwagen 12 in Querrichtung relativ zu den Fahrschienen 16, 18 festzulegen, weist das Fahrwerk in der Nähe der beiden Laufräder 32, 34 jeweils 4 Führungsrollen 40 auf, die an einer oberen Lauffläche der Fahrschiene 18 seitlich angreifen, wie dies an sich im Stand der Technik bekannt ist. Die Fahrschiene 18 dient daher gleichzeitig der Aufgabe, den Transportwagen 12 seitlich zu führen.

Die Schwenkwelle 30 erstreckt sich über die gesamte Breite des Tauchbeckens 10 und ist an einem Flansch 42 der Längstraverse 28 drehbar gelagert. An der Schwenkwelle 30, die ihrerseits das dritte Laufrad 38 lagert, sind zwei Schwenkarme 44, 46 befestigt. Bei einer Drehung der Schwenkwelle 30 um eine Schwenkachse 48, die quer zu den Fahrschienen 16, 18 und damit zur Förderrichtung verläuft, werden die Schwenkarme 44, 46 um die Schwenkachse 48 verschwenkt, wie dies weiter unten mit Bezug auf die Figuren 2 bis 6 näher erläutert wird.

An den Enden der Schwenkarme 44, 46 ist jeweils eine Schwenklasche 49 bzw. 50 angelenkt, deren Enden über eine Quertraverse 51 miteinander verbunden sind. Die Quertraverse 51 trägt ihrerseits eine Befestigungseinrichtung 52, mit der die Fahrzeugkarosserie 24 an der Quertraverse 51 befestigt werden kann. Die Befestigungseinrichtung 52 kann zu diesem Zweck mehrere Verschlussbolzen 53 aufweisen, die in Bohrungen der Fahrzeugkarosserie 24 eingeführt und dort durch Drehung verriegelt werden können.

Die beiden Schwenklaschen 49, 50 sind gemeinsam bezüglich der Schwenkarme 44, 46 um eine Drehachse 55 drehbar, die parallel zur Schwenkachse 48 verläuft. Die Drehung der Schwenklaschen 49, 50 um die Drehachse 55 wird von einem Elektromotor 56 bewirkt, der über einen in der Figur 2 erkennbaren Zahnriemen 58 und einem weiteren, im Inneren des Schwenkarms 46 verlaufenden Zahnriemen mit der Drehwelle 54 verbunden ist.

Insoweit entspricht das Fördersystem 14 weitgehend dem Fördersystem, das in der eingangs genannten DE 10 2010 004 974 A1 der Anmelderin beschrieben ist, auf die deswegen bezüglich weiterer Einzelheiten des Transportwagens 12 an dieser Stelle verwiesen wird.

Um die Schwenkwelle 30 mit den darin befestigten Schwenkarmen 44, 46 zu drehen, weist der Transportwagen 12 einen Schwenkantrieb 60 auf. Dieser umfasst einen mit der Schwenkwelle 30 starr verbundenen und radial nach außen ragenden Koppelhebel 62, einen elektrischen Antriebsmotor 64 und einen Gurt 66 auf. Der Gurt 66 ist an einem Ende mit dem Koppelhebel 62 verbunden und am anderen Ende auf eine Spule 68 aufgewickelt, die von dem Antriebsmotor 64 angetrieben wird. Die dazu benötigte elektrische Energie bezieht der Antriebsmotor 64 von einem Akkumulator 70.

Im Folgenden wird die Funktion des Schwenkantriebs 60 erläutert:
Dreht der Antriebsmotor 64 die Spule 68 entgegen dem Uhrzeigersinn, so wird der Gurt 66 von der Spule 68 aufgewickelt. Der Koppelhebel 62 wird durch den Gurt 66 zur Spule hin 68 ausgelenkt, wodurch die Schwenkwelle 30 ebenfalls entgegen dem Uhrzeigersinn gedreht wird, was zu einem Anheben der Schwenkarme 44, 46 und der davon getragenen Fahrzeugkarosserie 24 führt.

Um die Schwenkarme 44, 46 ausgehend von der in der Figur 2 gezeigten Stellung abzusenken, wird der Antriebsmotor 64 in den Generatorbetrieb umgeschaltet. Aufgrund des Eigengewichts der Schwenkarme 44, 46, der Schwenklaschen 49, 50, der Quertraverse 51, der Befestigungseinrichtung 52 und der Fahrzeugkarosserie 24 senken sich die Schwenkarme 44, 46 selbsttätig ab. Der Gurt 66 bleibt dabei gestrafft und wird von der Spule 68 abgewickelt. Der Antriebsmotor 64 erzeugt im Generatorbetrieb ein Bremsmoment, das ein zu schnelles Absenken verhindert. Im Generatorbetrieb kann somit aus der Absenkbewegung elektrische Energie erzeugt werden, die in dem Akkumulator 70 gespeichert wird. Diese Energie kann zu einem späteren Zeitpunkt zum Anheben der Schwenkarme 44, 46 und davon gehaltenen Fahrzeugkarosserie 24 genutzt werden.

Um die Geschwindigkeit der Senkbewegung zu steuern und die Senkbewegung beim gewünschten Schwenkwinkel zu beenden, kann der Antriebsmotor 64 so angesteuert werden, dass er der Drehung der Spule 68 im Uhrzeigersinn ein ausreichend großes Drehmoment entgegensetzt. In diesem Fall wird allerdings elektrische Energie zum Bremsen der Absenkbewegung verbraucht.

Alternativ oder zusätzlich kann eine verstellbare Bremse, z.B. eine Reibbremse oder ein einfach wirkender Pneumatikzylinder, vorgesehen sein, um die Senkbewegung zu kontrollieren.

Außerdem kann anstelle oder zusätzlich zum Akkumulator 70 ein mechanischer Energiespeicher, etwa in Form einer Druckfeder, vorgesehen sein, der beim Absenken eine bremsende Wirkung hat, aber gleichzeitig potentielle Energie speichert und diese beim Anheben der Schwenkarme 44, 46 wieder zur Verfügung stellt. In Betracht kommt außerdem, an der Schwenkwelle 30 ein Gegengewicht anzubringen. Dieses kompensiert teilweise die Gewichtskraft der Schwenkarme 44, 46 und der Fahrzeugkarosserie 24, und zwar vorzugsweise in einem solchen Umfang, dass das Absenken mit der gewünschten Geschwindigkeit erfolgt und dadurch gar nicht erst Bedarf nach einer Bremswirkung entsteht.

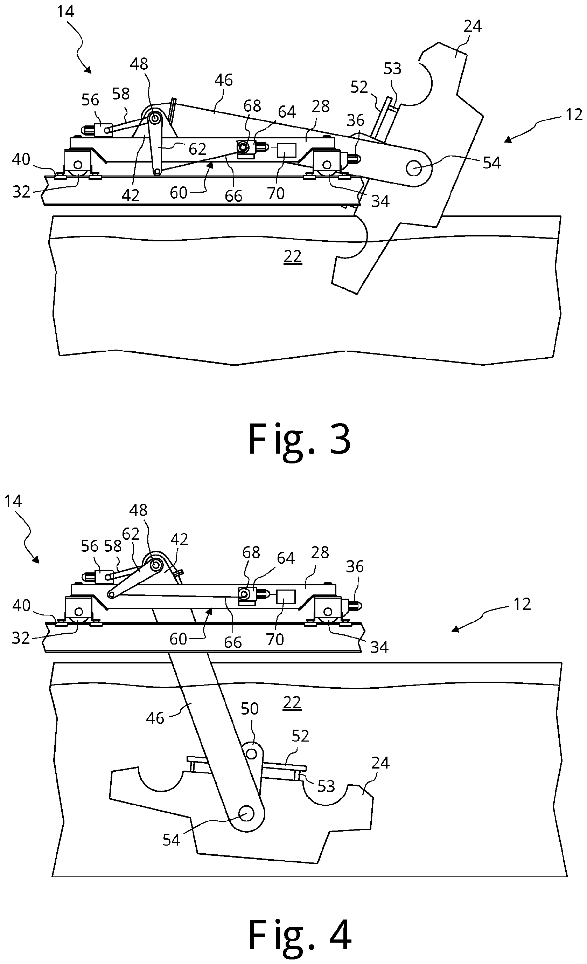

Die Figuren 3 und 4 zeigen den Transportwagen 12 zu unterschiedlichen Zeitpunkten während eines Eintauchvorgangs. Man erkennt, dass durch Drehung der Spule 68 im Uhrzeigersinn der Gurt 66 soweit abgewickelt wird, bis die Fahrzeugkarosserie 24 ihre tiefste Lage im Tauchbecken 10 einnimmt, wie dies in der Figur 4 gezeigt ist. In dieser Lage wirken auf den Gurt 66 nur noch geringe Zugkräfte, da der gemeinsame Schwerpunkt der Schwenkarme 44, 46, der Schwenklaschen 49, 50 und der Fahrzeugkarosserie 24 sich annähernd unterhalb der Schwenkachse 48 befindet. Folglich wird nur ein sehr kleines Drehmoment auf die Schwenkachse 48 ausgeübt und der Gurt 66 nur schwach auf Zug belastet.

In den Figuren 2 bis 4 ist ferner erkennbar, dass während des Eintauchvorgangs die Fahrzeugkarosserie 24 zusätzlich mit Hilfe des Elektromotors 56 um die Drehachse 55 gedreht wird. Auf diese Weise lassen sich praktisch beliebige Eintauchkurven realisieren.

Um die Fahrzeugkarosserie 24 wieder aus dem Tauchbecken 10 herauszuheben, müssen die Schwenkarme 44, 46 wieder in die in der Figur 2 gezeigte Ausgangslage überführt werden. Wie bereits erwähnt, wird hierzu der Gurt 66 mit Hilfe des Antriebsmotors 64 auf der Spule 68 aufgewickelt. Dadurch dreht sich der Koppelhebel 62 und die damit verbundene Schwenkwelle 30 entgegen dem Uhrzeigersinn. Dabei werden die an der Schwenkwelle 30 befestigten Schwenkarme 44, 46 und die davon getragene Fahrzeugkarosserie 24 angehoben.

Wie man in den Figuren 2 bis 4 außerdem erkennen kann, ist der gesamte Schwenkwinkelbereich, der von den Schwenkarmen 44, 46 überstrichen werden kann, auf einen Wert von etwa 170° begrenzt. Dadurch wird verhindert, dass es bei annähernd vertikal ausgerichteten Schwenkarmen 44, 46 zu Totpunkten kommt und keine Zugspannung mehr auf den Gurt 66 wirkt.

### 2. Zweites Ausführungsbeispiel

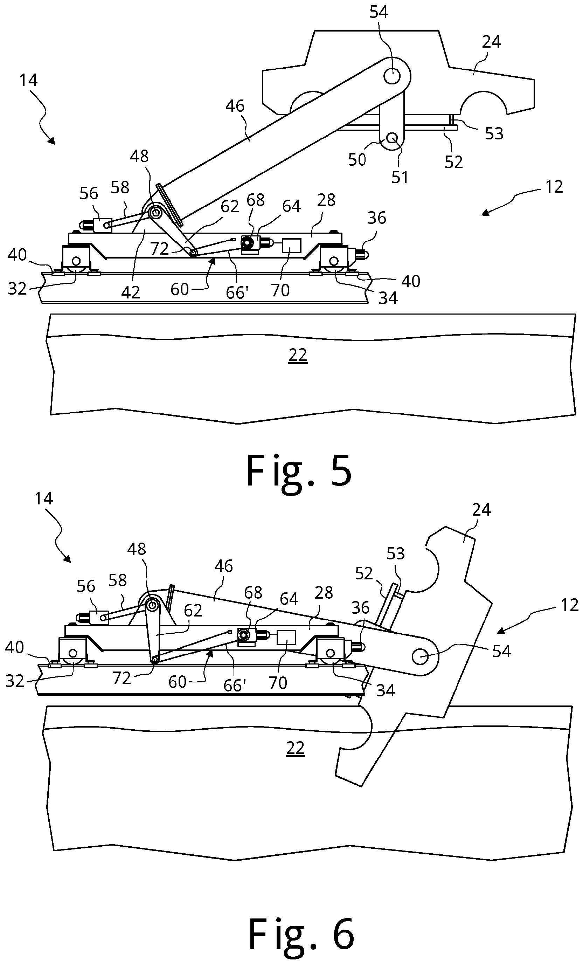

Die Figuren 5 und 6 zeigen in an die Figuren 2 und 3 angelehnten Darstellungen einen Transportwagen 12 gemäß einem zweiten Ausführungsbeispiel.

Dieser Transportwagen 12 unterscheidet sich von dem ersten Ausführungsbeispiel lediglich dadurch, dass das Ende des Gurts 66' nicht am Ende des Koppelhebels 62 befestigt ist, sondern über eine dort angebrachte Umlenkrolle 72 geführt und an der Längstraverse 28 fixiert ist. Dadurch wird ein Flaschenzug gebildet, der den Koppelhebel 62 mit dem Antriebsmotor 64 verbindet und das vom Antriebsmotor 64 aufzubringende Drehmoment halbiert. Auf diese Weise kann gegebenenfalls auf ein Untersetzungsgetriebe verzichtet werden, das den Antriebsmotor 64 mit der Spule 68 verbindet. Wenn weitere Umlenkrollen vorgesehen werden, lässt sich selbstverständlich auch eine entsprechend größere Reduzierung des vom Antriebsmotor 64 aufzubringenden Drehmoments erzielen.

### BEZUGSZEICHENLISTE

- 10: Tauchbecken
- 12: Transportwagen
- 14: Fördersystem
- 16: Erste Fahrschiene
- 18: Zweite Fahrschiene
- 22: Flüssigkeit
- 24: Fahrzeugkarosserie
- 28: Längstraverse
- 30: Schwenkwelle
- 32: Erstes Laufrad
- 34: Zweites Laufrad
- 36: Fahrmotor
- 38: Drittes Laufrad
- 40: Führungsrollen
- 42: Flansch
- 44: Erster Schwenkarm
- 46: Zweiter Schwenkarm
- 48: Schwenkachse
- 49: Erste Schwenklasche
- 50: Zweite Schwenklasche
- 51: Quertraverse
- 52: Befestigungseinrichtung
- 53: Verschlussbolzen
- 54: Drehwelle
- 55: Drehachse
- 56: Elektromotor
- 58: Zahnriemen
- 60: Schwenkantrieb
- 62: Koppelhebel
- 64: Antriebsmotor
- 66: Gurt
- 66': Gurt
- 68: Spule
- 70: Akkumulator
- 72: Umlenkrolle

## Patentansprüche

1. Fördersystem (14) zum Transport von Gegenständen (24) in einer Tauchbehandlungsanlage, in der die Gegenstände (24) durch ein mit einer Flüssigkeit (22) gefülltes Tauchbecken (10) gefördert werden, mit
a) mindestens einer außerhalb des Tauchbeckens (10) angeordneten Fahrschiene (16, 18) und mit
b) einem Transportwagen (12), wobei der Transportwagen umfasst:
- ein Fahrgestell (28, 30),
- ein an dem Fahrgestell befestigtes Fahrwerk (32, 34, 38), das von der mindestens einen Fahrschiene (16, 18) getragen wird,
- eine Schwenkwelle (30), und
- einen Schwenkarm (44, 46), der, durch Drehung der Schwenkwelle (30), um eine quer zu der mindestens einen Fahrschiene (16, 18) angeordnete Schwenkachse (48) schwenkbar ist und an einem von der Schwenkachse (48) weg weisenden Ende eine Befestigungseinrichtung (52) trägt zum Befestigen eines in das Tauchbecken (10) einzutauchenden Gegenstandes (24) an dem Transportwagen (24),
- einem Antrieb (60) mit einem Motor (64) zum Schwenken des Schwenkarms (44, 46) um die Schwenkachse (48),
**dadurch gekennzeichnet, dass**
der Antrieb (60) ferner ein langgestrecktes biegeschlaffes Zugelement (66; 66') und einen mit der Schwenkwelle (30) starr verbundenen und radial nach außen ragenden Koppelhebel (62) umfasst, mit welchem das Zugelement (66; 66') an einem Ende verbunden ist,
wobei
das Zugelement (66, 66') den Schwenkarm (44, 46) über den Koppelhebel (62) mit dem Motor (64) so verbindet, dass der Schwenkarm (44, 46) aufgrund der Schwerkraft und von dem Zugelement (66; 66') kontrolliert gehalten absenkbar und mit Hilfe des Motors (64) und des Zugelements (66; 66') anhebbar ist.

2. Fördersystem nach Anspruch 1, **dadurch gekennzeichnet, dass** das Zugelement (66') Teil eines Flaschenzuges ist, der den Schwenkarm (44, 46) mit dem Motor (64) verbindet.

3. Fördersystem nach Anspruch 2, **dadurch gekennzeichnet, dass** das Zugelement (66') an einem Ende auf eine von dem Motor (64) angetriebenen Spule (68) aufgewickelt, an dem anderen Ende an dem Fahrgestell (28) befestigt und über eine an dem Schwenkarm (44, 46) befestigte Umlenkrolle (72) geführt ist.

4. Fördersystem nach einem der vorhergehenden Ansprüche, **dadurch gekennzeichnet, dass** der Transportwagen (12) einen Energiespeicher (70) trägt, der beim Absenken des Schwenkarms (44, 46) aufladbar und dessen gespeicherte Energie beim Anheben des Schwenkarms (44, 46) nutzbar ist.

5. Fördersystem nach Anspruch 4, **dadurch gekennzeichnet, dass** der Motor (64) ein Elektromotor ist und der Energiespeicher ein Akkumulator (70) ist, der dazu eingerichtet ist, beim Absenken des Schwenkarms (44, 46) von dem Elektromotor (64) im Generatorbetrieb erzeugte elektrische Energie zwischenzuspeichern.

6. Fördersystem nach einem der vorhergehenden Ansprüche, **dadurch gekennzeichnet, dass** die Befestigungseinrichtung (52) relativ zu dem Schwenkarm (44, 46) um eine Drehachse (54) motorisch verschwenkbar ist, die parallel zu der Schwenkachse (48) des Schwenkarms (44, 46) angeordnet ist.

7. Fördersystem nach einem der vorhergehenden Ansprüche, **dadurch gekennzeichnet, dass** das biegeschlaffe Zugelement ein Gurt (66; 66') ist.

8. Fördersystem nach einem der vorhergehenden Ansprüche, **dadurch gekennzeichnet, dass** ein Schwenkwinkelbereich des Schwenkarms (44, 46) auf einen Wert von weniger als 180° beschränkt ist.

## Claims

1. Conveyor system (14) for transporting articles (24) in an immersion treatment plant, in which the articles (24) are conveyed through an immersion tank (10) filled with a liquid (22), comprising
a) at least one running rail (16, 18) arranged outside the immersion tank (10) and
b) a trolley (12), wherein the trolley comprises:
- a trolley frame (28, 30),
- a running gear (32, 34, 38) attached to the trolley frame and supported by the at least one running rail (16, 18),
- a swivel shaft (30), and
- a swivel arm (44, 46) which, by rotation of the swivel shaft (30), can be swivelled about a swivel axis (48) arranged transversely to the at least one running rail (16, 18) and, at an end pointing away from the swivel axis (48), carries a fastening device (52) for fastening an object (24) to be immersed in the immersion tank (10) to the transport carriage (24),
- a drive (60) comprising a motor (64) for pivoting the swivel arm (44, 46) about the swivel axis (48),
**characterised in that**
the drive (60) further comprises an elongated flexible pulling element (66; 66') and a coupling lever (62) which is rigidly connected to the pivot shaft (30) and projects radially outwards and to which the traction element (66; 66') is connected at one end,
wherein
the pulling element (66, 66') connects the swivel arm (44, 46) to the motor (64) via the coupling lever (62) in such a way that the swivel arm (44, 46) can be lowered due to gravity and held in a controlled manner by the pulling element (66; 66') and can be raised by means of the motor (64) and the pulling element (66; 66').

2. Conveyor system according to claim 1, **characterised in that** the pulling element (66') is part of a pulley block that connects the swivel arm (44, 46) to the motor (64).

3. Conveyor system according to claim 2, **characterised in that** the pulling element (66') is wound at one end onto a spool (68) driven by the motor (64), is attached at the other end to the chassis (28) and is guided over a deflection pulley (72) attached to the swivel arm (44, 46).

4. Conveyor system according to one of the preceding claims, **characterised in that** the transport carriage (12) carries an energy storage device (70) which can be charged when the swivel arm (44, 46) is lowered and whose stored energy can be used when the swivel arm (44, 46) is raised.

5. Conveyor system according to claim 4, **characterised in that** the motor (64) is an electric motor and the energy storage device is an accumulator (70) which is configured to temporarily store electrical energy generated by the electric motor (64) in generator mode when the swivel arm (44, 46) is lowered.

6. Conveyor system according to one of the preceding claims, **characterised in that** the fastening device (52) can be pivoted by motor relative to the pivot arm (44, 46) about an axis of rotation (54) which is arranged parallel to the pivot axis (48) of the pivot arm (44, 46).

7. Conveyor system according to one of the preceding claims, **characterised in that** the flexible pulling element is a belt (66; 66').

8. Conveyor system according to any one of the preceding claims, **characterised in that** a pivot angle range of the pivot arm (44, 46) is limited to a value of less than 180°.

## Revendications

1. Système de transport (14) pour le transport d'objets (24) dans une installation de traitement par immersion, dans laquelle les objets (24) sont transportés à travers un bassin d'immersion (10) rempli d'un liquide (22), avec
a) au moins un rail de roulement (16, 18) disposé en dehors du bassin d'immersion (10) et avec
b) un wagon de transport (12), dans lequel le wagon de transport comprend :
- un châssis (28, 30),
- un mécanisme de roulement (32, 34, 38) fixé au châssis, qui est porté par l'au moins un rail de roulement (16, 18),
- un arbre pivotant (30), et
- un bras pivotant (44, 46) qui peut être pivoté par rotation de l'arbre pivotant (30) autour d'un axe de pivotement (48) disposé transversalement à l'au moins un rail de roulement (16, 18) et porte à une extrémité détournée de l'axe de pivotement (48) un dispositif de fixation (52) pour la fixation d'un objet (24) à immerger dans le bassin d'immersion (10) au wagon de transport (24),
- un entraînement (60) avec un moteur (64) pour le pivotement du bras pivotant (44, 46) autour de l'axe de pivotement (48),
**caractérisé en ce que**
l'entraînement (60) comprend en outre un élément de traction (66 ; 66') étendu en longueur, détendu à la flexion et un levier d'accouplement (62) connecté de manière rigide à l'arbre pivotant (30) et dépassant radialement vers l'extérieur, avec lequel l'élément de traction (66 ; 66') est connecté à une extrémité,
dans lequel
l'élément de traction (66, 66') connecte le bras pivotant (44, 46) au moteur (64) par le biais du levier d'accouplement (62) de sorte que le bras pivotant (44, 46) peut être abaissé en étant maintenu de manière contrôlée en raison de la gravité et par l'élément de traction (66 ; 66') et peut être soulevé à l'aide du moteur (64) et de l'élément de traction (66 ; 66').

2. Système de transport selon la revendication 1, **caractérisé en ce que** l'élément de traction (66') fait partie d'une poulie qui connecte le bras pivotant (44, 46) au moteur (64).

3. Système de transport selon la revendication 2, **caractérisé en ce que** l'élément de traction (66') est enroulé à une extrémité sur une bobine (68) entraînée par le moteur (64), fixé à l'autre extrémité au châssis (28) et guidé par le biais d'une poulie de renvoi (72) fixée au bras pivotant (44, 46).

4. Système de transport selon une des revendications précédentes, **caractérisé en ce que** le wagon de transport (12) porte un accumulateur d'énergie (70) qui peut être rechargé lors de l'abaissement du bras pivotant (44, 46) et dont l'énergie accumulée peut être exploitée lors du soulèvement du bras pivotant (44, 46).

5. Système de transport selon la revendication 4, **caractérisé en ce que** le moteur (64) est un moteur électrique et l'accumulateur d'énergie est un accumulateur (70) qui est configuré pour stocker de manière temporaire de l'énergie électrique générée lors de l'abaissement du bras pivotant (44, 46) par le moteur électrique (64) en mode générateur.

6. Système de transport selon une des revendications précédentes, **caractérisé en ce que** le dispositif de fixation (52) peut être pivoté de manière motorisée par rapport au bras pivotant (44, 46) autour d'un axe de rotation (54) qui est disposé parallèlement à l'axe de pivotement (48) du bras pivotant (44, 46).

7. Système de transport selon une des revendications précédentes, **caractérisé en ce que** l'élément de traction détendu à la flexion est une sangle (66 ; 66').

8. Système de transport selon une des revendications précédentes, **caractérisé en ce qu'**une plage d'angle de pivotement du bras pivotant (44, 46) est limitée à une valeur de moins de 180 °.
